# DEMANDE DE BREVET EUROPEEN

(11) **EP 4 071 672 A1**
(43) Date de publication de la demande: **12.10.2022**
(21) Numéro de dépôt: 22162558.5
(22) Date de dépôt: 16.03.2022
(51) Int. Cl.: G06N 3/08, G06N 7/00, H04L 41/06, H04L 41/16, H04L 43/04

(54) **CLASSIFICATION DE PANNES INCONNUES DANS UN SYSTÈME DE COMMUNICATIONS ÉLECTRONIQUES**

(30) Priorité: 19.03.2021 FR 2102748
(71) Demandeur: Orange, 92130 Issy-les-Moulineaux (FR)
(72) Inventeur: ECHRAIBI, Amine, 92326 CHÂTILLON CEDEX (FR); FLOCON-CHOLET, Joachim, 92326 CHÂTILLON CEDEX (FR); GOSSELIN, Stéphane, 92326 CHÂTILLON CEDEX (FR)

(57) **Abrégé**

L'invention concerne un procédé de classification d'une panne affectant un système complexe et appartenant à une classe inconnue, mis en œuvre par un réseau neuronal, le procédé comprenant :
• une première étape (E1) d'apprentissage du réseau neuronal, avec un premier corpus de données représentatives de pannes dont la classe est connue,
• une étape (E2) d'extraction de données cachées du réseau neuronal, produites avec un second corpus de données représentatives de pannes dont la classe est inconnue,
• une étape (E3) de clustering des données cachées extraites, produisant au moins un cluster correspondant à une classe nouvelle de panne,
• une étape (E4) d'ajout d'au moins une classe nouvelle au réseau neuronal,
• une seconde étape (E5) d'apprentissage du réseau neuronal, avec au moins une partie du second corpus correspondant à l'au moins une classe nouvelle ajoutée,
• une étape (E6) de classification de la panne appartenant à une classe inconnue avec le réseau neuronal.

## Description

### 1. Domaine de l'invention

L'invention se situe dans le domaine de l'apprentissage machine de reconnaissance d'objets. Plus particulièrement, l'invention concerne un type de problème, connu sous le nom anglais de "zero shot learning" (traduit approximativement en "apprentissage à partir de zéro"), où le système doit apprendre à reconnaitre des objets appartenant à des classes qui sont inconnues pendant la phase d'apprentissage. Plus particulièrement, l'invention s'applique au diagnostic de pannes inconnues dans des réseaux ou systèmes complexes de communications électroniques.

### 2. Etat de la technique antérieure

Les méthodes de zero-shot learning proposées jusqu'à présent sont adaptées à des domaines d'application précis (reconnaissance d'images, compréhension du langage naturel, diagnostic de pannes de systèmes mécaniques / industriels). Ces domaines d'application sont notamment caractérisés par une grande homogénéité des données traitées pour l'apprentissage (images pour la reconnaissance d'images, phrases pour la compréhension du langage naturel, variables numériques pour les systèmes mécaniques). Ces méthodes ne permettent pas, notamment, de traiter des jeux de données hétérogènes mélangeant des variables numériques, textuelles et/ou catégorielles en grand nombre qui sont une des caractéristiques des systèmes complexes.

Un des buts de l'invention est de remédier à ces inconvénients de l'état de la technique.

### 3. Exposé de l'invention

L'invention vient améliorer la situation à l'aide d'un procédé de classification d'une panne affectant un système complexe de communications électroniques et appartenant à une classe inconnue de panne, mis en œuvre par un dispositif comprenant un réseau neuronal, le procédé comprenant :
- une première étape d'apprentissage du réseau neuronal, avec un premier corpus de données représentatives de pannes dont la classe est connue,
- une étape d'extraction de données transformées par le réseau neuronal, dites données cachées, produites avec un second corpus de données représentatives de pannes dont la classe est inconnue,
- une étape de clustering des données cachées extraites, produisant au moins un cluster correspondant à une classe nouvelle de panne,
- une étape d'ajout d'au moins une classe nouvelle au réseau neuronal,
- une seconde étape d'apprentissage du réseau neuronal, avec au moins une partie du second corpus correspondant à l'au moins une classe nouvelle ajoutée,
- une étape de classification de la panne appartenant à une classe inconnue avec le réseau neuronal.

Le procédé revendiqué exploite le paradigme de l'apprentissage machine de type "zero-shot learning" pour permettre d'identifier de nouvelles classes de pannes ou dysfonctionnements d'un système complexe, ce système étant caractérisé par la production de données (variables, alarmes, paramètres, identifiants, ...) de grande dimensionnalité (plusieurs milliers de variables possibles), et ce pour des dizaines ou centaines de milliers d'instances de fonctionnement du système complexe. Le procédé exploite des données disponibles pour des pannes connues des experts métiers, ces instances de données étant déjà labellisées avec les classes de pannes connues, par exemple par un outil de diagnostic à base de règles métiers. Le procédé exploite également des instances de données disponibles pour des pannes inconnues des experts métiers, ces instances de données n'étant pas labellisées (cause racine de panne inconnue). Le procédé revendiqué permet alors de découvrir des clusters de pannes inconnues dans les instances de données non-labellisées, et ce sans que le nombre de classes inconnues de pannes soit connu à l'avance.

Dans une des mises en œuvre de la solution proposée, l'apprentissage machine est réalisé en une seule fois sur un jeu de données de haute dimensionnalité comportant à la fois des instances de pannes connues (données labellisées) et des instances de pannes inconnues (défauts non identifiés, données non labellisées). L'algorithme transforme de manière optimale l'espace de représentation des données pour tirer parti de la connaissance métier (les labels de pannes connues) et permet d'en sortir plusieurs clusters correspondant à de nouvelles classes de pannes (pannes inconnues). D'autres mises en œuvre du procédé permettent à l'apprentissage machine d'être plus progressif, avec plusieurs itérations du procédé effectuées sur des corpus de données différents, et avec des étapes décisionnelles portant sur le choix du ou des clusters à conserver à chaque itération.

Le fonctionnement d'un système complexe, dont les réseaux et services de communications électroniques ne sont qu'un exemple, a la particularité d'être régi par un très grand nombre de paramètres techniques hétérogènes, ce qui rend le diagnostic d'une panne par un humain très difficile. L'apprentissage machine du procédé de classification proposé résout un problème technique la plupart du temps insoluble par un être humain, même expert.

Les paramètres techniques font l'objet d'une étape préalable de prétraitement des données relatives aux pannes, produisant des valeurs de variables numériques. Le réseau neuronal comprend une couche d'entrée avec au moins autant de neurones que de variables numériques distinctes.

Selon un aspect du procédé de classification, le réseau neuronal comprend une couche de sortie avec au moins autant de neurones que de classes connues de pannes, et l'ajout d'une classe nouvelle signifie l'ajout d'un neurone dans la couche de sortie. Ainsi, la couche de sortie permet de discriminer les classes de pannes entre elles, et s'adapte facilement à l'augmentation du nombre de classes distinguables.

Selon un aspect du procédé de classification, le réseau neuronal est un perceptron multicouche, et comprend, en plus de la couche de sortie, une couche d'entrée et au moins une couche intermédiaire entre les couches d'entrée et de sortie.

Parmi les nombreux types de réseau de neurones artificiels utilisables par le procédé proposé, le perceptron multicouche (MLP) est bien adapté car sa structure simple permet d'extraire facilement des données dites cachées, c'est-à-dire des données internes générées par le perceptron entre ses données d'entrée et de sortie. D'autres types de réseaux neuronaux conviennent, avec d'autres fonctions d'activation, linéaires ou non, au niveau de chaque neurone par exemple, il suffit de pouvoir extraire les valeurs produites par n'importe laquelle des couches intermédiaires. Les réseaux neuronaux en général et les MLP en particulier ont aussi l'avantage de permettre une réduction de la dimensionnalité de l'espace des données brutes, facilitant ainsi le clustering.

Selon un aspect du procédé de classification, un neurone est connecté à tous les neurones d'une couche voisine, précédente ou suivante.

Selon un aspect du procédé de classification, les données cachées sont extraites de la dernière couche intermédiaire avant la couche de sortie.

Lorsque les corpus de pannes connues sont suffisamment riches, l'avant-dernière couche du MLP est a priori la plus intéressante d'un point de vue métier, car en étant plus proche de la couche de sortie qui représente les classes de pannes connues elle "incorpore" la riche connaissance métier associée aux pannes connues. Cependant, les autres couches intermédiaires peuvent convenir, notamment s'il y a peu de pannes connues. Un compromis sur le numéro de couche intermédiaire à utiliser peut être exploré, en fonction de la quantité de connaissance métier déjà disponible à travers les pannes connues.

Selon un aspect du procédé de classification, partant de la couche d'entrée et allant vers la couche de sortie, la taille d'une couche par rapport à la taille d'une couche précédente est diminuée d'un facteur supérieur ou égal à 2.

Grâce à cet aspect, le procédé proposé est applicable à des données complexes de grandes dimensions, telles que les très variées et très nombreuses variables décrivant une panne dans un système de communications électroniques. Même si la couche d'entrée comprend un très grand nombre de neurones, un grand nombre de couches intermédiaire n'est pas nécessaire pour arriver à une couche de sortie comportant un petit nombre de neurones correspondant à un nombre limité de classes de pannes différentes.

Selon un aspect du procédé de classification, l'étape de clustering utilise un modèle génératif de mélanges gaussiens à processus de Dirichlet.

L'inférence des clusters est avantageusement réalisée en combinant un modèle génératif de mélanges infinis, par exemple basé sur le processus de Dirichlet pour tester différents nombres de clusters, avec un processus d'inférence variationnelle pour calibrer dans chaque cluster les différentes distributions de données cachées. Cette technique fonctionne sans connaitre à l'avance le nombre de clusters, et, comparée à d'autres méthodes d'inférence telles que les chaines de Markov Monte Carlo, l'inférence variationnelle a l'avantage de rendre l'inférence des clusters plus robuste à la grande dimensionnalité des données du système complexe à diagnostiquer.

Selon un aspect du procédé de classification, l'étape d'ajout est précédée d'une étape de sélection de l'au moins une classe nouvelle de panne si le cluster correspondant présente un degré minimum de distinction ou d'indépendance par rapport aux autres clusters de classes de pannes connues.

Grâce à cet aspect, il est possible maintenir un certain niveau de qualité de l'apprentissage du classificateur, en ne sélectionnant une nouvelle classe de panne que si le cluster correspondant présente un degré minimum de distinction ou d'indépendance par rapport aux autres clusters de classes de pannes connues, c'est à dire sur la base d'un critère représentatif de pertinence du cluster correspondant. L'atteinte de ce degré minimum est aussi un critère de pertinence d'une classe de panne d'un point de vue métier, qui peut être évalué par un expert humain, ou automatiquement par des critères statistiques, tel que par exemple des critères informationnels inhérents aux clusters, ou le taux de reconnaissance des classes après réapprentissage incluant la ou les nouvelles classes correspondant aux nouveaux clusters découverts.

Selon un aspect du procédé de classification, suite à la seconde étape d'apprentissage, au moins un cycle des étapes suivantes est effectué :
- une nouvelle étape d'extraction de données cachées du réseau neuronal, produites avec un nouveau second corpus de données représentatives de pannes dont la classe est inconnue,
- une nouvelle étape de clustering des données cachées extraites, produisant au moins un cluster correspondant à une classe nouvelle de panne,
- une nouvelle étape d'ajout d'au moins une classe nouvelle au réseau neuronal,
- une nouvelle seconde étape d'apprentissage du réseau neuronal, avec au moins une partie du nouveau second corpus correspondant à l'au moins une classe nouvelle ajoutée.

Ainsi, la découverte de nouvelles classes de panne est graduelle, ce qui permet d'adapter le procédé à une disponibilité progressive des corpus de données représentatives de pannes dont la classe est inconnue. De plus, il est ainsi possible de découvrir des espaces de représentations intermédiaires plus efficaces à la discrimination par clustering des données cachées.

Selon un aspect du procédé de classification, une seule classe nouvelle de panne est sélectionnée après une étape de clustering.

Ainsi, lorsque plusieurs clusters sont découverts, il est possible de ne retenir que celui qui est susceptible d'être le plus fiable ou le plus pertinent. Lorsque plusieurs cycles extraction / clustering / ajout / apprentissage sont effectués, identifier une seule classe nouvelle de panne par cycle, a l'avantage de rendre plus homogènes les corpus successifs de données de pannes inconnues, et de rendre les étapes de clustering plus efficaces.

L'invention concerne aussi un dispositif de classification comprenant un réseau neuronal, pour classifier une panne affectant un système complexe de communications électroniques et appartenant à une classe inconnue de panne, le dispositif comprenant en outre une interface d'entrée de données représentatives de pannes, une interface de sortie d'information relative à une classe de panne, au moins un processeur et au moins une mémoire, couplée à l'au moins un processeur, avec des instructions qui lorsqu'exécutées par l'au moins un processeur conduisent celui-ci à mettre en œuvre les opérations suivantes :
- apprentissage du réseau neuronal, avec un premier corpus de données représentatives de pannes dont la classe est connue,
- extraction de données transformées par le réseau neuronal, dites données cachées, produites avec un second corpus de données représentatives de pannes dont la classe est inconnue,
- clustering des données cachées extraites, produisant au moins un cluster correspondant à une classe nouvelle de panne,
- ajout d'au moins une classe nouvelle au réseau neuronal,
- apprentissage du réseau neuronal, avec au moins une partie du second corpus correspondant à l'au moins une classe nouvelle ajoutée,
- classification de la panne appartenant à une classe inconnue avec le réseau neuronal.

Ce dispositif, apte à mettre en œuvre dans tous ses modes de réalisation le procédé de classification qui vient d'être décrit, est destiné à être mis en œuvre dans un ou plusieurs ordinateurs.

L'invention concerne aussi un programme d'ordinateur comprenant des instructions qui, lorsque ces instructions sont exécutées par un processeur, conduisent celui-ci à mettre en œuvre les étapes du procédé de classification, qui vient d'être décrit.

L'invention vise aussi un support d'informations lisible par un ordinateur, et comportant des instructions d'un programme d'ordinateur tel que mentionné ci-dessus.

Le programme mentionné ci-dessus peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le support d'informations mentionné ci-dessus peut être n'importe quelle entité ou dispositif capable de stocker le programme. Par exemple, un support peut comporter un moyen de stockage, tel qu'une ROM, par exemple un CD ROM ou une ROM de circuit microélectronique, ou encore un moyen d'enregistrement magnétique.

Un tel moyen de stockage peut par exemple être un disque dur, une mémoire flash, etc. D'autre part, un support d'informations peut être un support transmissible tel qu'un signal électrique ou optique, qui peut être acheminé via un câble électrique ou optique, par radio ou par d'autres moyens. Un programme selon l'invention peut être en particulier téléchargé sur un réseau de type Internet.

Alternativement, un support d'informations peut être un circuit intégré dans lequel un programme est incorporé, le circuit étant adapté pour exécuter ou pour être utilisé dans l'exécution du procédé en question.

### 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
[Fig 1] la figure 1 présente un exemple de mise en œuvre du procédé de classification, selon un premier mode de réalisation de l'invention,
[Fig 2] la figure 2 présente un exemple de mise en œuvre du procédé de classification, selon un second mode de réalisation de l'invention,
[Fig 3] la figure 3 représente en 2D des données correspondant à des classes inconnues selon un mode de réalisation de l'invention,
[Fig 4] la figure 4 représente en 2D les mêmes données inconnues selon une technique antérieure,
[Fig 5] la figure 5 présente un exemple de structure d'un dispositif de classification, selon un aspect de l'invention.

### 5. Description détaillée d'au moins un mode de réalisation de l'invention

La solution proposée ici exploite le paradigme de l'apprentissage machine de type "zero-shot learning" pour permettre d'identifier de nouvelles classes de pannes ou dysfonctionnements d'un système complexe, ce système étant caractérisé par la production de données hétérogènes (variables numériques, alarmes, paramètres, identifiants, champs textuels, ...) de grande dimensionnalité (plusieurs milliers de variables possibles), et ce pour des dizaines ou centaines de milliers d'instances de pannes du système complexe (une instance étant définie comme l'ensemble des données contextuelles ayant pu être récoltées pour diagnostiquer un cas de panne particulier). La solution proposée suppose que des instances de données sont disponibles pour chaque panne connue des experts métiers, ces instances de données étant déjà labellisées avec les classes de pannes connues, par exemple par un système expert à base de règles métiers (couramment implémenté par les entités ou entreprises s'appuyant sur le dit système complexe pour fournir des ressources ou services à leurs usagers ou clients). La solution proposée suppose aussi que des instances de données sont disponibles pour des cas de pannes inconnues, qui n'ont donc pas pu être labellisées par manque de connaissance métier sur ces instances de données. Comme les outils de diagnostic couramment utilisés sur des systèmes complexes ne permettent pas de diagnostiquer toutes les pannes possibles, la solution proposée ici en est un complément avantageux, en permettant d'identifier des pannes jusqu'alors inconnues des experts métiers.

Le principe général de la solution proposée est d'apprendre une transformation optimale de l'espace de représentation des données pour tirer parti de la connaissance métier (les labels de pannes connues), pour ensuite effectuer une analyse exploratoire des données permettant de trouver (on dit aussi inférer) des clusters de pannes inconnues dans les données non-labellisées. Le résultat de l'analyse exploratoire est ainsi une partition des données non-labellisées selon plusieurs clusters de pannes inconnues, le nombre de ces classes inconnues n'étant pas forcément fixé à l'avance.

La solution proposée dispose en entrée d'un nombre important d'instances de données de pannes, chaque instance de données d'une panne étant constituée d'un grand nombre de variables hétérogènes, ainsi que des labels de pannes pour les instances de pannes qui sont connues. Cet ensemble de données initiales est tout d'abord prétraité, avec des prétraitements de l'état de l'art :
- soit en discrétisant les variables numériques pour les transformer en variables catégorielles, et en transformant les champs textuels en variables catégorielles. Une variable catégorielle est ici définie comme une variable pouvant prendre ses valeurs dans un ensemble fini de valeurs appelées catégories, telles que par exemple « poire », « banane » ou « pomme » ;
- soit en recentrant et en normalisant les variables numériques, en transformant les champs textuels en variables catégorielles, puis en transformant toutes les variables catégorielles en variables binaires, qui sont alors traitées comme des variables numériques. Une variable catégorielle est transformée en variables binaires à l'aide de l'encodage one-hot : la variable catégorielle pouvant prendre N valeurs différentes est remplacée par N variables binaires valant 1 ou 0 selon la valeur de catégorie.

L'un ou l'autre des prétraitements est utilisé, selon que la variante de méthode d'apprentissage machine utilisée est adaptée à des données catégorielles ou des données numériques.

Spécifiquement, grâce aux labels des instances de pannes connues, la solution proposée apprend une transformation mathématique de l'espace de données initial en un espace de données transformé, qui traduit la similarité statistique entre les instances de pannes connues ayant le même label. L'analyse exploratoire sur l'espace de données ainsi transformé a pour but de trouver (on dit aussi inférer) différents clusters qui représenteront chacun une classe de panne inconnue et/ou reproduiront les classes de pannes connues. Cette inférence des clusters de pannes peut être réalisée par différentes méthodes de clustering, par exemple avec des modèles génératifs de mélanges infinis couplés à de l'inférence par chaines de Markov Monte Carlo ou à de l'inférence variationnelle. Les modèles génératifs de mélanges infinis ont l'avantage de ne pas nécessiter de fixer à l'avance le nombre de clusters à trouver : ils permettent de déterminer automatiquement le nombre de clusters de pannes inconnues, et sont donc adaptés pour le diagnostic de pannes des systèmes complexes.

La transformation mathématique de l'espace de données, apprise à partir des connaissances métiers que constituent les labels des instances de pannes connues, permet à la solution proposée de partitionner l'ensemble des instances de données non labellisées de manière pertinente au regard de la problématique de diagnostic de pannes. En utilisant de plus la technique de modèles génératifs de mélanges infinis, la solution proposée permet de déterminer automatiquement le nombre de clusters de pannes inconnues.

D'abord, les instances de données labellisées prétraitées sont utilisées pour apprendre un classificateur, c'est-à-dire une transformation mathématique permettant la reconnaissance des labels de pannes connues. Cette étape fait appel à de l'apprentissage supervisé par les labels de pannes connues. Les instances de données transformées ne sont pas les labels en tant que tel, mais des instances de données transformées appelées données cachées, et reflétant ce qui est considéré comme étant des caractéristiques "métier" des données initiales. Beaucoup de techniques différentes sont possibles pour cette étape, résultant en une transformation linéaire ou non-linéaire des données. Les exemples les plus connus pour une transformation non-linéaire sont les réseaux de neurones, eux-mêmes réalisables selon un grand nombre de variantes possibles.

Ensuite, les instances de données non-labellisées sont projetées dans l'espace de données transformé, à l'aide de la transformation apprise ci-dessus. Cela permet de travailler dans un autre espace de données, reflétant les caractéristiques « métier » des données initiales pour les classes de pannes connues.

Enfin, des clusters de pannes inconnues sont inférés sur des instances de données non-labellisées, mais en travaillant sur les données transformées et non sur les données initiales. L'inférence des clusters est réalisée en combinant un modèle génératif de mélanges infinis, par exemple basé sur le processus de Dirichlet, et une méthode d'inférence variationnelle, qui transforme avantageusement le problème d'inférence en un problème d'optimisation. Comparée à d'autres méthodes d'inférence telles que les chaines de Markov Monte Carlo, l'inférence variationnelle a l'avantage de rendre l'inférence des clusters plus robuste à la grande dimensionnalité des données du système complexe à diagnostiquer.

Le procédé proposé a été expérimenté avec des données réelles provenant du réseau d'un opérateur fournissant un accès Internet à des millions de clients. Le corpus de données utilisé comprend les données techniques de 64279 clients équipé d'un accès Internet de type FTTH. Les instances clients ont été classées en 8 classes de pannes connues, dont une classe spéciale pour le fonctionnement normal (non panne, 19604 instances). Les 7 autres classes connues dans ce corpus sont :
- Fibre coupée (18282 instances)
- Fibre dégradée (6906 instances)
- Problème d'interopérabilité entre l'ONT (terminal optique client) et la passerelle domestique (6782 instances)
- Problème de mise à jour de passerelle domestique (6050 instances)
- Mauvaise configuration de passerelle domestique (3732 instances)
- Compte client supprimé (1527 instances)
- Problème TV (1396 instances)

Chaque instance de données d'un client comprend 1824 caractéristiques ou variables, propres à différentes parties du réseau et caractérisant l'état de la ligne du client. Ces variables peuvent être de tous types (champs textuels, variables catégorielles, variables numériques). Parmi ces 1824 variables, les propriétés du réseau FTTH GPON sont par exemple décrites par 652 variables, celles des équipements domestiques (passerelle, set top box, etc.) par 446 variables, celles des services TV et VoIP par 204 variables, celles de la session Internet (DHCP) par 256 variables, celles du profil client par 41 variables. Ces 1824 variables sont prétraitées et transformées en 8297 variables numériques ou binaires (elles-mêmes vues comme variables numériques), comme expliqué plus haut.

Par ailleurs, ce premier corpus de 64279 instances de données classées selon 8 classes de pannes connues, appelé par la suite C1, est complété par un second corpus de 21960 instances de données représentatives de cas de pannes inconnues, appelé par la suite C2. Comme pour le premier corpus, chaque instance de données du second corpus comprend 1824 variables de tous types, prétraitées et transformées en 8297 variables numériques ou binaires (elles-mêmes vues comme variables numériques), comme expliqué plus haut.

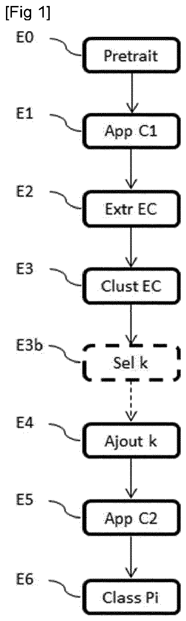

La **figure 1** présente un exemple de mise en œuvre du procédé de classification, selon un premier mode de réalisation de l'invention.

La finalité du procédé est de classer une instance de panne Pi non labellisée dans une catégorie ou classe de panne, lorsque cette instance n'appartient à aucune des classes initialement connues. Le procédé suppose de disposer d'un certain nombre d'instances non labellisées de pannes de la même classe inconnue que Pi.

Lors d'une étape E0, les instances de données représentant des pannes sont prétraitées selon l'une des méthodes connues décrites plus haut. Un premier corpus de données prétraitées, noté C1, comprend des instances de pannes connues et labellisées, chaque label identifiant de façon biunivoque une panne connue. Chaque instance de panne connue dans C1 est constituée d'un label de panne Lp et d'un vecteur de Nvp variables, Nvp étant le nombre de variables (après le prétraitement E0) caractérisant une panne. Le nombre de labels différents de pannes connues est noté Npc. Par exemple un label de panne connue est un nombre entier prenant une valeur entre 1 et Npc.

Un second corpus de données prétraitées, noté C2, comprend des instances de pannes inconnues et non labellisées. Dans C2, et de façon générale pour toute instance de panne non labellisée, le label de panne Lp peut par exemple prendre la valeur zéro (ou toute autre valeur négative choisie pour représenter une classe inconnue, on réserve ici par pure convention les valeurs strictement positives aux labels de pannes connues).

Lors d'une étape E1, les instances de données labellisées prétraitées, c'est-à-dire les instances du corpus C1, ou d'une partie du corpus C1, sont utilisées pour apprendre la transformation mathématique du classificateur permettant la reconnaissance des labels de pannes connues. Cette étape fait appel à de l'apprentissage supervisé par les labels de pannes connues.

Par exemple, le classificateur est un réseau de neurones de type MLP (multi layer perceptron), dont la structure comprend une première couche de Nvp neurones en entrée, une ou plusieurs couches intermédiaires de neurones, et une dernière couche de Npc neurones en sortie. Le nombre de couches intermédiaires et de neurones par couche intermédiaire est déterminé par des règles de bonne pratique : typiquement on peut réduire la dimensionnalité (nombre de neurones par couche) d'un facteur 2 en passant d'une couche à l'autre du réseau de neurones. A titre d'exemple, avec le corpus C1 décrit plus haut, le réseau de neurones utilisé comporte quatre couches intermédiaires dont le nombre de neurones sont respectivement 2000, 1000, 500 et 100, sachant que la première couche comprend Nvp=8297 neurones et que la dernière couche comprend Npc=8 neurones. L'objectif est ainsi d'opérer une réduction de dimensionnalité afin d'obtenir Niex (le nombre de neurones constituant la dernière couche intermédiaire) très inférieur à Nvp (nombre de variables dans l'espace initial). D'autres choix de nombre de couches intermédiaires et de nombres de neurones dans chaque couche sont bien sûr possibles sans que la performance du réseau de neurones en soit significativement affectée. L'apprentissage du MLP avec le corpus C1, ou une partie du corpus C1, est effectué selon une technique connue (descente de gradient avec algorithme de rétropropagation), jusqu'à obtenir un taux de reconnaissance acceptable (au moins 90%) sur des instances de pannes connues, éventuellement choisies à l'extérieur du corpus C1 ou dans une partie du corpus C1 qui n'a pas été utilisée pour l'apprentissage.

Lors d'une étape E2, des instances de données transformées, dites aussi données cachées, sont extraites du MLP appris lors de l'étape E1, en fournissant les instances du corpus C2, ou d'une partie du corpus C2, en entrée au MLP. Plus précisément, pour chacune de ces instances de pannes inconnues non labellisées fournies en entrée du MLP, ce sont les valeurs sortant des neurones de l'avant-dernière couche du MLP qui sont extraites, autrement dit de sa dernière couche intermédiaire, pour former un ensemble, noté EC, de vecteurs de taille Niex, Niex étant le nombre de neurones constituant la dernière couche intermédiaire du MLP.

Lors d'une étape E3, les instances de pannes inconnues non labellisées sont regroupées par clusters. Plus précisément, des clusters nouveaux de pannes, dont le nombre est noté K, sont inférés à partir de l'ensemble EC de vecteurs de taille Niex, c'est-à-dire à partir des données transformées et extraites de la dernière couche intermédiaire du MLP lorsque des instances du corpus C2 sont fournies à la couche d'entrée du MLP.

Ce clustering est effectué, sans connaitre à l'avance le nombre de clusters, en combinant un processus de Dirichlet pour tester différents nombres de clusters, avec un processus d'inférence variationnelle pour calibrer les différentes distributions de vecteurs de taille Niex dans chaque cluster. Une telle technique est décrite, dans le cas de variables catégorielles, dans l'article "An Infinite Multivariate Categorical Mixture Model for Self-Diagnosis of Telecommunication Networks," 2020 23rd Conférence on Innovation in Clouds, Internet and Networks and Workshops (ICIN), Paris, France, 2020, pp. 258-265. Cette technique est implémentable aussi dans le cas de variables numériques, pour traiter des données dont la distribution est gaussienne, ce qui n'est pas nécessairement le cas des données brutes même après prétraitement, mais peut être attendu des données transformées contenues dans le corpus C2. On parle alors de modèles génératifs de mélanges gaussiens à processus de Dirichlet (DP-GMM).

Lors d'une étape E4, le classificateur est adapté en ajoutant de nouvelles classes à l'ensemble initial des classes connues 1, ..., Npc. Deux choix sont possibles dans cette étape : soit la totalité des K clusters de pannes inconnues découverts en étape E3 sont associés respectivement à des nouveaux labels de pannes connues Npc+1, ..., Npc+K, soit une partie seulement de ces clusters sont associés à des nouveaux labels de pannes connues Npc+1, ..., Npc+k, k étant un entier compris entre 1 et K-1 inclus. Pour le deuxième choix, la sélection, lors d'une étape E3b, des clusters à considérer comme nouvelles classes de pannes connues peut être réalisée suite à une analyse statistique - et/ou par un expert métier du système complexe à diagnostiquer - des clusters découverts en étape E3, de façon à ne retenir comme nouvelles pannes connues que les clusters jugés extrêmement pertinents d'un point de vue métier. Dans les deux cas, la structure du MLP est modifiée afin que sa couche de sortie présente Npc+k neurones, par ajout de k nouveaux neurones, k représentant le nombre de nouvelles classes de pannes connues, et étant un entier compris entre 1 et K inclus.

Lors d'une étape E5, des labels sont attribués aux k clusters identifiés précédemment, et chaque instance de panne du corpus C2, pourvu qu'elle soit présente dans un cluster retenu en étape E4, reçoit le label du cluster dans lequel l'instance a été placée par l'étape E3 de clustering. Les nouveaux labels Lp sont par exemple numérotés de Npc+1 à Npc+k comme indiqué dans la description de l'étape E4. Le second corpus C2 est ainsi modifié en un corpus C2', en y enlevant le cas échéant toutes les instances non présentes dans un cluster retenu en étape E4, et par attribution des valeurs de labels nouvellement découverts aux labels Lp dont la valeur initiale était inférieure ou égale à zéro (correspondant à classe inconnue). Ces nouvelles valeurs correspondent à des pannes nouvelles par rapport aux Npc pannes connues du corpus C1, et leur regroupement par cluster facilite l'établissement d'un diagnostic par un expert, humain ou robot. Puis, lors de cette étape E5, le classificateur adapté lors de l'étape E4, c'est-à-dire le MLP modifié, est entrainé avec les données des corpus C1 et C2' réunis.

Finalement, lors d'une étape E6, l'instance de panne Pi, de classe auparavant inconnue et n'appartenant pas au corpus C2, est soumise en entrée au classificateur modifié et ré-entrainé, ce qui permet de prédire, en sortie du classificateur, le label de panne auparavant inconnue de l'instance Pi. On comprend que grâce au procédé proposé n'importe quelle instance de panne de classe auparavant inconnue et non labellisée peut être correctement classée dans une des k nouvelles classes retenues en étape E4.

Le procédé de classification proposé permet d'utiliser une grande variété de méthodes d'apprentissage machine, que ce soit pour l'étape E1 d'apprentissage de la transformation de l'espace de données qui peut être réalisée avec une technique d'apprentissage supervisé permettant l'accès à des données cachées, ou pour l'étape E3 de clustering des données non-labellisées, qui peut être réalisée avec une technique d'apprentissage non-supervisé.

Avantageusement, ce procédé permet de traiter de manière indépendante (i) l'injection de connaissance métier que constitue la prise en compte des instances de pannes connues et des labels correspondants dans le corpus C1, et (ii) la découverte de clusters de pannes inconnues parmi les instances de données non-labellisées du corpus C2, sachant que cette découverte bénéficie grandement de la transformation de données réalisée en étape E2.

Dans l'exemple qui vient d'être décrit, l'étape E1 qui est aussi une étape d'apprentissage de la transformation des données de l'étape E2, n'utilise que les instances de données labellisées (corpus C1), et donc n'intègre pas les caractéristiques statistiques des instances de données non labellisées (corpus C2) qui permettraient d'enrichir l'apprentissage machine. Ce premier mode de réalisation de la méthode proposée est donc particulièrement adapté lorsque le corpus C1 est de grande taille, très largement représentatif de la diversité des pannes possibles du système complexe à diagnostiquer, et qu'un nombre plus petit d'instances de pannes (corpus C2) correspondent à des pannes inconnues.

Dans un second mode de réalisation de la méthode proposée, l'intégration des caractéristiques statistiques des instances de données non labellisées (corpus C2) est approchée en incorporant graduellement plusieurs corpus de type C2 (ou plusieurs parties du corpus C2 initial si sa taille le permet), au moyen de plusieurs itérations des étapes E0 à E4 du procédé de classification. A la fin de chaque itération, des classes nouvelles sont ajoutées aux classes connues, le corpus C2' (c'est-à-dire une partie labellisée du corpus C2, ou la totalité du corpus C2 labellisé) est ajouté au corpus C1 et l'itération suivante utilise un nouveau corpus C2 et/ou la partie de C2 qui n'a pas été labellisée, et les itérations sont répétées jusqu'à incorporation de tous les corpus C2.

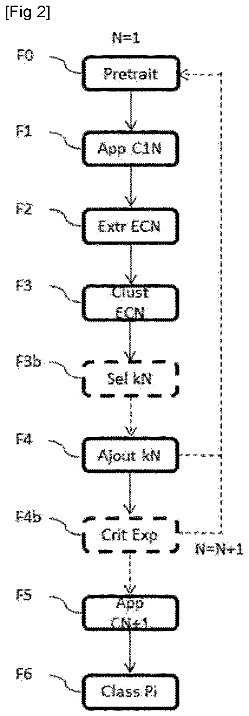

La **figure 2** présente un exemple de mise en œuvre du procédé de classification, selon un second mode de réalisation de l'invention.

Spécifiquement, en partant des corpus C1 et C2 tels que décrits dans le premier mode de réalisation, les étapes d'une itération N de ce second mode de réalisation sont décrites ci-après.

La première itération N=1 a uniquement pour spécificité de considérer les corpus C1N-1 et C2N-1 évoqués en étape F0 comme étant des corpus vides. Les étapes de chaque itération sont donc décrites de manière générique pour une itération quelconque notée N.

Lors d'une étape F0 de l'itération N, de nouveaux corpus C1N et C2N sont formés puis, s'ils ne l'ont pas déjà été, sont prétraités de façon identique à l'étape E0 précédemment décrite.

Le corpus C1N peut combiner au choix plusieurs parties : (i) une partie ou la totalité du corpus C1N-1 qui a été utilisé lors de l'itération précédente N-1 ; (ii) une partie du corpus C1 initial qui n'a pas été utilisée lors de l'itération précédente N-1 ; (iii) des instances de pannes connues récemment obtenues lors de l'opération du système complexe à diagnostiquer, et dont les labels de pannes sont issus par exemple d'un système expert à base de règles métier ; (iv) une partie des clusters découverts dans C2N-1 lors de l'étape de clustering de l'itération précédente N-1, ces clusters étant labellisés avec les nouveaux labels de pannes découverts lors de cette itération N-1. Cette approche de formation du corpus C1N permet d'incorporer uniquement, dans les premières itérations, les classes de pannes connues les plus importantes en termes d'effectifs ou de pertinence métier, puis, au fur et à mesure des itérations, d'avoir une représentativité complète de toutes les classes de pannes connues, puis des pannes auparavant inconnues devenues des classes de pannes connues lors des itérations successives. Le corpus C2N peut combiner au choix plusieurs parties : [i] une partie des clusters découverts dans C2N-1 lors de l'étape de clustering de l'itération précédente N-1 et n'ayant pas été considérés comme nouvelles classes de pannes connues lors de cette itération N-1. Cette partie de C2N-1 est disjointe de la partie de C2N-1 utilisée pour C1N selon (iv) ; [ii] une partie du corpus C2 initial qui n'a pas été utilisée lors de l'itération précédente N-1 ; [iii] des instances de pannes inconnues récemment obtenues lors de l'opération du système complexe à diagnostiquer, qui n'ont pas pu être classifiées dans des classes de pannes connues. Cette approche de formation du corpus C2N permet d'introduire progressivement, lors des itérations, la nouveauté représentée par les instances de pannes inconnues, dans la mesure où ces instances peuvent présenter un caractère atypique d'un point de vue métier, ce qui pourrait perturber la découverte de nouvelles classes de pannes pertinentes d'un point de vue métier.

Lors d'une étape F1 de l'itération N, le corpus C1N est utilisé pour apprendre la transformation mathématique du classificateur permettant la reconnaissance des labels de pannes connues. Cette étape fait appel à de l'apprentissage supervisé par les labels de pannes connues, et est équivalente à l'étape E1 du premier mode de réalisation, à la différence près que l'apprentissage est ici effectué à partir du corpus C1N construit lors de l'étape F0 de l'itération N.

Lors d'une étape F2 de l'itération N, des instances de données transformées, dites aussi données cachées, sont extraites du MLP appris lors de l'étape F1 de l'itération N, en fournissant les instances du corpus C2N en entrée au MLP. Cette étape est équivalente à l'étape E2 du premier mode de réalisation, à la différence près que c'est le corpus C2N, construit lors de l'étape F0 de l'itération N, qui fournit les instances en entrée du MLP. L'ensemble de ces instances de données transformées issu de cette étape F2 est appelé ECN.

Lors d'une étape F3 de l'itération N, les instances de pannes inconnues non labellisées sont regroupées par clusters. Plus précisément, des clusters nouveaux de pannes, dont le nombre est noté KN, sont inférés à partir de l'ensemble ECN de vecteurs de taille Niex, c'est-à-dire à partir des données transformées et extraites de la dernière couche intermédiaire du MLP lorsque les instances du corpus C2N sont fournies à la couche d'entrée du MLP. Cette étape est équivalente à l'étape E3 du premier mode de réalisation, à la différence près que les clusters nouveaux de pannes sont inférés dans l'ensemble ECN.

Lors d'une étape F4 de l'itération N, le classificateur est adapté en ajoutant de nouvelles classes à l'ensemble des classes de pannes connues issu de l'itération N-1. Cet ensemble des classes de pannes connues issu de l'itération N-1 comprend les classes de pannes connues initialement (avant la première itération) et toutes les classes de pannes auparavant inconnues ajoutées comme classes de pannes connues lors des étapes F4 des itérations précédentes 1, ..., N-1. Pour l'ajout de nouvelles classes lors de cette itération N, deux choix sont possibles : soit la totalité des KN clusters de pannes inconnues découverts en étape F3 sont associés à des nouveaux labels de pannes connues, soit une partie seulement de ces clusters sont associés à des nouveaux labels de pannes connues. Pour le deuxième choix, la sélection, lors d'une étape F3b, des clusters à considérer comme nouvelles classes de pannes connues peut être réalisée suite à une analyse statistique - et/ou par un expert métier du système complexe à diagnostiquer - des clusters découverts en étape F3, de façon à ne retenir comme nouvelles pannes connues que les clusters jugés extrêmement pertinents d'un point de vue métier. Cette sélection des clusters pertinents est notamment importante lors des premières itérations, de façon à garantir la fiabilité des connaissances métier injectées à travers ces nouvelles classes de pannes connues lors de ces étapes F4. Il est notamment judicieux, lors des premières itérations, de n'ajouter qu'une seule nouvelle classe de pannes par étape F4. Dans tous les cas, la structure du MLP est modifiée afin que sa couche de sortie présente kN nouveaux neurones, kN représentant le nombre de nouvelles classes de pannes connues, et étant un entier compris entre 1 et KN inclus.

L'étape F4 précédemment décrite termine l'itération N de ce second mode de réalisation, ce qui permet de réinjecter pour l'itération suivante une structure modifiée du MLP prenant en compte de nouvelles classes de pannes connues dans sa couche de sortie, et des clusters de pannes auparavant inconnues qui sont désormais identifiés comme classes de pannes connues, en cohérence avec la modification de structure du MLP. L'itération suivante N+1 reprend ensuite à l'étape F0 par la formation des nouveaux corpus C1N+1 et C2N+1.

Compte tenu des nombreuses possibilités de formation des corpus C1N et C2N, les étapes F0 à F4 peuvent être itérées un grand nombre de fois, sans critère de terminaison précis. Toutefois il est important de noter que l'étape F4 peut incorporer une étape F4b de décision sur la poursuite des itérations. Cette étape de décision F4b détermine si le procédé itératif doit bifurquer, en se terminant ou non, vers une étape de classification d'une panne particulière de classe inconnue. Il est par ailleurs possible de terminer les itérations lorsque tous les corpus C2 disponibles ont été épuisés au fur et à mesure de la découverte de nouvelles classes de pannes. L'étape F4b peut s'appuyer sur l'analyse statistique de l'étape F3b, et être automatisée à l'aide d'un système expert, ou effectuée par un expert humain, aidé ou non par le système expert. Il est également possible de se reposer sur l'étape F1 de l'itération suivante N+1, où un taux de reconnaissance insatisfaisant (inférieur à un seuil donné) sur le nouvel ensemble de labels de pannes connues (le corpus C1N+1) peut être dû à une sélection non optimale des nouveaux clusters lors de l'étape F3b de l'itération courante N. Le procédé peut alors revenir à cette étape F3b de l'itération N afin de corriger la sélection, manuellement, ou selon une règle de sélection corrective préétablie (par exemple en sélectionnant un nombre inférieur de clusters correspondant à une nouvelle classe, ou en en sélectionnant d'autre(s)).

De façon à pouvoir classifier à tout moment une instance de panne Pi, de classe auparavant inconnue, l'étape F4 ou F4b de l'itération N peut être suivie directement (en parallèle d'une nouvelle itération N+1) d'un ré-apprentissage du MLP lors d'une étape F5 équivalente à l'étape E5 du premier mode de réalisation, et d'une classification de l'instance de panne Pi, lors d'une étape F6 équivalente à l'étape E6 du premier mode de réalisation, en prédisant son label de panne auparavant inconnue, mais désormais connue après les N itérations de ce second mode de réalisation.

Pour ces étapes F5 et F6, les corpus de données utilisés sont alors les corpus C1N et C2'N, ce dernier étant défini de manière équivalente au corpus C2' de l'étape E5, mais en partant du corpus C2N. En termes de procédé, les étapes F5 et F6 constituent une bifurcation permettant de sortir de la boucle constituée par les étapes F0 à F4, et permettent finalement de classer correctement n'importe quelle instance de panne de classe auparavant inconnue et non labellisée dans une des nouvelles classes de pannes obtenues progressivement lors des itérations successives des étapes F0 à F4.

Dans une variante de ce second mode de réalisation, lorsqu'aucun corpus de données labellisées C1 n'est disponible, la première itération, après prétraitement du corpus C2 initial en étape F0, passe ensuite directement en étape F3 avec le clustering d'une partie ou de la totalité du corpus C2 initial prétraité et sans réaliser l'apprentissage F1 ni la transformation des données de l'étape F2.

Avantageusement, ce second mode de réalisation permet d'enrichir l'apprentissage machine en intégrant progressivement les caractéristiques statistiques des instances de pannes inconnues. La transformation mathématique apprise en étape F1 est ainsi de plus en plus représentative de l'ensemble des caractéristiques métier des données utilisées au fur et à mesure des itérations. Ce second mode de réalisation de la méthode proposée est donc notamment adapté lorsque le corpus C1 initial est de taille modeste ou peu représentatif de la diversité des pannes possibles du système complexe à diagnostiquer, et qu'un nombre plus grand d'instances de pannes (corpus C2 initial) correspondent à des pannes inconnues. Ce second mode de réalisation peut néanmoins être tout aussi adapté dans un contexte opérationnel d'exploitation du système complexe à diagnostiquer, car il permet une amélioration incrémentale et progressive de la méthode de diagnostic préservant la fiabilité des diagnostics et réduisant le nombre d'instances de pannes inconnues.

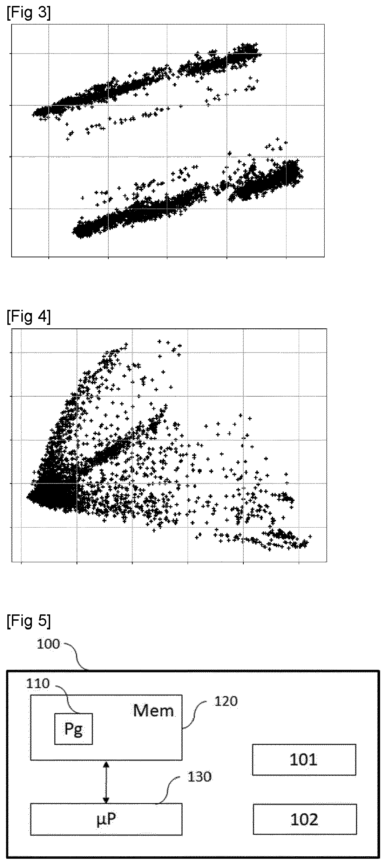

A titre d'illustration de l'efficacité du procédé de classification proposé, les figures 3 et 4 présentent une comparaison entre une exploration réalisée grâce au procédé revendiqué, et une exploration de type non-supervisé utilisée classiquement.

Dans un premier temps les étapes E0 et E1 sont réalisées, au cours desquelles un réseau de neurones est appris à partir d'un corpus de données labélisées (C1) composé de 64279 instances réparties selon 8 classes. Le corpus C1 a été prétraité et transformé en 8297 variables numériques. Le réseau de neurones utilisé ici est composé de 4 couches intermédiaires dont le nombre de neurones est respectivement 2000, 1000, 500 et 100. Les fonctions d'activation dans les neurones sont de type ReLU (Rectified Linear Unit).

La **figure 3** représente la projection des données inconnues (corpus C2) sur l'avant-dernière couche cachée du réseau de neurones (étape E2). A ce stade, on peut voir clairement qu'il existe deux populations bien distinctes suggérant deux types de pannes différentes. Après interprétation, il semblerait que les deux comportements de pannes soient relatifs à un problème entre l'ONT et la passerelle domestique pour l'un, et à un problème au niveau GPON (réseau optique passif) pour l'autre.

A titre de comparaison, la **figure 4** illustre une représentation de ces mêmes données (corpus C2) mais exploitées selon une technique connue, c'est-à-dire dans l'espace d'origine composé de 8297 variables. Cette représentation traduit une approche exploratoire non supervisée. Ici, aucune connaissance métier n'est exploitable et il parait difficile d'identifier clairement des clusters.

En relation avec la **figure 5**, on présente maintenant un exemple de structure d'un dispositif de classification, selon un aspect de l'invention.

Le dispositif 100 de sélection met en œuvre le procédé de classification, dont différents modes de réalisation viennent d'être décrits.

Un tel dispositif 100 peut être mis en œuvre dans un ou plusieurs ordinateurs.

Par exemple, le dispositif 100 comprend une interface d'entrée 101, une interface de sortie 102, une unité de traitement 130, équipée par exemple d'un microprocesseur µP, et pilotée par un programme d'ordinateur 110, stocké dans une mémoire 120 et mettant en œuvre le procédé de classification selon l'invention. A l'initialisation, les instructions de code du programme d'ordinateur 110 sont par exemple chargées dans une mémoire RAM, avant d'être exécutées par le processeur de l'unité de traitement 130.

Une telle mémoire 120, un tel processeur de l'unité de traitement 130, une telle interface d'entrée 101, une interface de sortie 102, sont aptes à, et configurés pour :
- l'apprentissage d'un réseau neuronal, avec un premier corpus de données représentatives de pannes dont la classe est connue,
- l'extraction de données cachées du réseau neuronal, produites avec un second corpus de données représentatives de pannes dont la classe est inconnue,
- le clustering des données cachées extraites, produisant au moins un cluster correspondant à une classe nouvelle de panne,
- l'ajout d'au moins une classe nouvelle au réseau neuronal,
- l'apprentissage du réseau neuronal, avec au moins une partie du second corpus correspondant à l'au moins une classe nouvelle ajoutée,
- la classification de la panne appartenant à une classe inconnue avec le réseau neuronal.

Les entités ou modules décrits en relation avec la figure 5 compris dans le dispositif de classification peuvent être matériels ou logiciels. La figure 5 illustre seulement une manière particulière, parmi plusieurs possibles, de réaliser l'algorithme détaillé ci-dessus, en relation avec les figures 1 et 2. En effet, la technique de l'invention se réalise indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel), ou sur un conteneur virtuel ou une machine virtuelle, hébergés dans une machine de calcul reprogrammable ou dans un nuage informatique.

Dans le cas où l'invention est implantée sur une machine de calcul reprogrammable, le programme correspondant (c'est-à-dire la séquence d'instructions) pourra être stocké dans un médium de stockage amovible (tel que par exemple une clé USB, une disquette, un CD-ROM ou un DVD-ROM) ou non, ce médium de stockage étant lisible partiellement ou totalement par un ordinateur ou un processeur.

## Revendications

1. Procédé de classification d'une panne affectant un système complexe de communications électroniques et appartenant à une classe inconnue de panne, mis en œuvre par un dispositif comprenant un réseau neuronal, le procédé comprenant :
• une première étape (E1, F1) d'apprentissage du réseau neuronal, avec un premier corpus de données représentatives de pannes dont la classe est connue,
• une étape (E2, F2) d'extraction de données transformées par le réseau neuronal, dites données cachées, produites avec un second corpus de données représentatives de pannes dont la classe est inconnue,
• une étape (E3, F3) de clustering des données cachées extraites, produisant au moins un cluster correspondant à une classe nouvelle de panne,
• une étape (E4, F4) d'ajout d'au moins une classe nouvelle au réseau neuronal,
• une seconde étape (E5, F1, F5) d'apprentissage du réseau neuronal, avec au moins une partie du second corpus correspondant à l'au moins une classe nouvelle ajoutée,
• une étape (E6, F6) de classification de la panne appartenant à une classe inconnue avec le réseau neuronal.

2. Procédé selon la revendication précédente, où le réseau neuronal comprend une couche de sortie avec au moins autant de neurones que de classes connues de pannes, et où l'ajout (E4, F4) d'une classe nouvelle signifie l'ajout d'un neurone dans la couche de sortie.

3. Procédé selon la revendication précédente, où le réseau neuronal est un perceptron multicouche et comprend en outre une couche d'entrée et au moins une couche intermédiaire, entre les couches d'entrée et de sortie.

4. Procédé selon la revendication précédente, où les données cachées sont extraites (E2, F2) de la dernière couche intermédiaire avant la couche de sortie.

5. Procédé selon l'un des revendications 3 à 4, où, de la couche d'entrée vers la couche de sortie, la taille d'une couche par rapport à la taille d'une couche précédente est diminuée d'un facteur supérieur ou égal à 2.

6. Procédé selon l'une des revendications précédentes, où l'étape de clustering (E3, F3) utilise un modèle génératif de mélanges gaussiens à processus de Dirichlet.

7. Procédé selon l'une des revendications précédentes, où l'étape d'ajout (E4, F4) est précédée d'une étape de sélection (E3b, F3b) de l'au moins une classe nouvelle de panne si le cluster correspondant présente un degré minimum de distinction ou d'indépendance par rapport aux autres clusters de classes de pannes connues.

8. Procédé selon l'une des revendications précédentes, où suite à la seconde étape d'apprentissage, au moins un cycle des étapes suivantes est effectué :
• une nouvelle étape (F2) d'extraction de données cachées du réseau neuronal, produites avec un nouveau second corpus de données représentatives de pannes dont la classe est inconnue,
• une nouvelle étape (F3) de clustering des données cachées extraites, produisant au moins un cluster correspondant à une classe nouvelle de panne,
• une nouvelle étape (F4) d'ajout d'au moins une classe nouvelle au réseau neuronal,
• une nouvelle seconde étape (F1, F5) d'apprentissage du réseau neuronal, avec au moins une partie du nouveau second corpus correspondant à l'au moins une classe nouvelle ajoutée.

9. Procédé selon l'une des revendications précédentes, où une seule classe nouvelle de panne est sélectionnée (E3b, F3b) après une étape de clustering (E3, F3).

10. Dispositif comprenant un réseau neuronal, pour classifier une panne affectant un système complexe de communications électroniques et appartenant à une classe inconnue de panne, le dispositif comprenant en outre une interface d'entrée de données représentatives de pannes (101), une interface de sortie d'information relative à une classe de panne (102), au moins un processeur (130) et au moins une mémoire (120), couplée à l'au moins un processeur, avec des instructions qui lorsqu'exécutées par l'au moins un processeur conduisent celui-ci à mettre en œuvre les opérations suivantes :
• apprentissage du réseau neuronal, avec un premier corpus de données représentatives de pannes dont la classe est connue,
• extraction de données transformées par le réseau neuronal, dites données cachées, produites avec un second corpus de données représentatives de pannes dont la classe est inconnue,
• clustering des données cachées extraites, produisant au moins un cluster correspondant à une classe nouvelle de panne,
• ajout d'au moins une classe nouvelle au réseau neuronal,
• apprentissage du réseau neuronal, avec au moins une partie du second corpus correspondant à l'au moins une classe nouvelle ajoutée,
• classification de la panne appartenant à une classe inconnue avec le réseau neuronal.

11. Programme d'ordinateur (110), comprenant des instructions qui, lorsque ces instructions sont exécutées par un processeur, conduisent celui-ci à mettre en œuvre les étapes du procédé de classification, selon l'une des revendications 1 à 9.

12. Support d'informations lisible par un ordinateur, et comportant des instructions d'un programme d'ordinateur (110) conforme à la revendication 11.
